(19) Europäisches Patentamt
European Patent Office
Office européen des brevets

(11) **EP 2 584 139 A1**

(12) **EUROPEAN PATENT APPLICATION**

(43) Date of publication:
**24.04.2013 Bulletin 2013/17**

(51) Int Cl.:
***E21B 41/00*** *(2006.01)*

(21) Application number: **11382321.5**

(22) Date of filing: **17.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Fundacion Ciudad de la Energia-Ciuden**
 **24400 Ponferrada - León (ES)**
• **Consejo Superior Investigaciones Cientificas**
 **28006 Madrid (ES)**

(72) Inventors:
• **Carrera Ramírez, Jesús**
 **E-08034 Barcelona (ES)**

• **Silva Rojas, Orlando**
 **E-24400 Ponferrada - León (CL)**
• **Ayora Ibánez, Carlos**
 **E-08034 Barcelona (ES)**

(74) Representative: **ABG Patentes, S.L.**
 **Avenida de Burgos, 16D**
 **Edificio Euromor**
 **28036 Madrid (ES)**

Remarks:
In accordance with Article 14(2), second sentence EPC the applicant has filed a text with which it is intended to bring the translation into conformity with the original text of the application.

(54) **Method and system for storing soluble gases in permeable geological formations**

(57) The present invention describes a method and system for storing soluble gases in permeable geological formations which promotes the dissolution of $CO_2$ and other soluble greenhouse gases in brine or water at the level of said formations and it in turn allows recovering energy from the non-soluble gases by extracting them from the system if the gases are formed by $CO_2$ plus other at least non-soluble gases. The storage is improved if the permeable geological formation is an aquifer by previously extracting water or brine from the latter. Dissolution with different mechanisms is favored.

EP 2 584 139 A1

**Description**

**Field of the Invention**

The present invention describes a method and system for storing soluble gases in permeable geological formations which promotes the dissolution of $CO_2$ and other soluble greenhouse gases in brine or water at the level of such formations and it in turn allows recovering energy from the non-soluble gases extracted from the system if the gases are formed by $CO_2$ plus other at least non-soluble gases. The storage is improved if the permeable geological formation is in an aquifer, by extracting water or brine previously from the aquifer. Dissolution with different mechanisms is favored.

**Background of the Invention**

Reducing carbon dioxide ($CO_2$) emissions to the atmosphere is a scientific and technological challenge currently faced by mankind. The sequestration of $CO_2$ in deep saline aquifers is considered a promising alternative to reduce these emissions:

● DOE, 1999. Carbon sequestration research and development.
US Department of Energy, Office of Science, Office of Fossil Energy, Washington, DC, Rep DOE/SC/FE-1.
● Bachu, S., 2002. Sequestration of CO2 in geological media in response to climate change: road map for site selection using the transform of the geological space into CO2 phase space. Energy Convers. Manag. 43, 87-102.
● Intergovernmental Panel on Climate Change, 2005. Chapter 5: Underground geological storage. In: Metz, B., et al. (eds.) Special Report on Carbon Dioxide Capture and Storage. Cambridge University Press, pp. 195-276, Cambridge.

The traditional concept for storage requires capturing pure $CO_2$ from the exhaust gases of thermal power plants, transporting the captured $CO_2$ to a suitable site on the surface, and the geological storage thereof. Geological storage is based on injecting supercritical $CO_2$ into a permeable geological formation, e.g., into deep saline aquifers with no predictive value as water reserves.

Currently, there are different experiences of deep gas injection. Injection of gases of economic interest for their temporary storage and $CO_2$ injection into petroleum reservoir rock in order to increase its recovery at the end of the conventional extraction (EOR: Enhanced Oil Recovery), are especially relevant. However, the method is expensive and the global storage capacity is insufficient. Hence, in recent years several countries have conducted experiments for storing supercritical $CO_2$ in deep saline aquifers, although the injected volumes are very small compared with the annual emission of a thermal power plant.

The conventional concept of $CO_2$ geological storage consists of injecting supercritical $CO_2$ into a saline aquifer at a sufficient depth so that the $CO_2$ has a high density (about 800 kg/m$^3$) and therefore occupies a reduced volume. This requires pressures higher than 80 bars, which explains that injection must be carried out at depths greater than 800 m. Supercritical $CO_2$ is less dense and less viscous than the saline water of the aquifer, therefore it tends to float easily until encountering a layer with low permeability and it forms a bubble in the upper part of the aquifer. For this reason, aquifers which are potential reservoirs must be covered by a caprock formation (type of impermeable rock) that prevents the migration of $CO_2$ to the surface. In the mid-term (hundreds of years), it is expected that most of the injected $CO_2$ is maintained as a pure phase forming a "bubble" which will gradually be dissolved.

$CO_2$ tends to dissolve into the brine (up to 3% by weight). At first, the dissolution is limited by diffusion and dispersion at the interface between the $CO_2$ phase and the saline water. However, brine with dissolved $CO_2$ is denser than the resident brine, they therefore form unstable fingers which are displaced to the bottom of the aquifer, increasing the contact surface and the mixing. Therefore, it is expected that the fraction of $CO_2$ dissolved in the brine increases with time and it is an effective way for mid-term storage (decades to hundreds of years).

Brine with dissolved $CO_2$ is acid and tends to dissolve the minerals of the aquifer increasing its permeability. Depending on the nature of said minerals and the chemical state of the brine, carbonate precipitation making up a third way for storing $CO_2$, the latter at a longer term (perhaps thousands of years) can also occur. The acidity of the brine with $CO_2$ may also affect the chemical stability of caprock minerals, favoring possible $CO_2$ leakage into the biosphere.

Geological storage of carbon dioxide has several practical problems:

● Supercritical $CO_2$ is less dense than the water of the aquifer, therefore it will tend to float and leak from the aquifer. To prevent this, it is important to choose sites in which there is a competent geological formation of very low permeability which acts as a seal. It is difficult to assure the leak-tightness and competence of the caprock. It is very likely that this is a limiting factor to the available storage capacity and will be a deterring factor for the large investments that are needed, since verifying the leak-tightness of the caprock requires a large investment.

● Another key problem is that the storage capacity is limited. The space to be occupied by the $CO_2$ is basically obtained by:

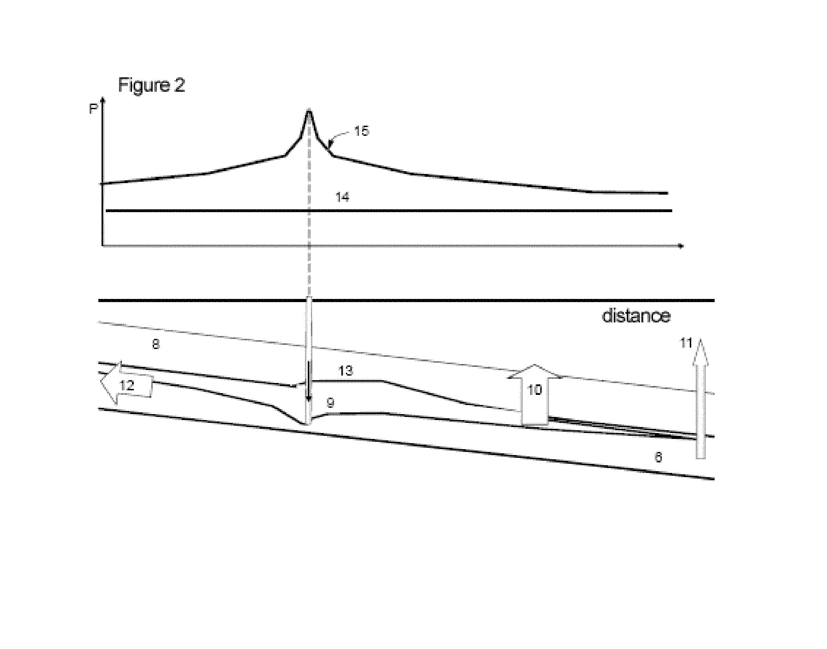

a) compressing the fluids and expanding the pores of the aquifer, which increases the pressure of the fluids, increasing the energy cost of the injection and storage, and compromising the mechanical stability of the caprock, and

b) displacing the resident water in the aquifer, which in the mid-term involves contaminating the groundwater and/or surface waters of the site (Figure 2). In the long-term, the $CO_2$ will dissolve into the water of the aquifer and the risk vanishes, but the time needed is uncertain and may be very long.

In this sense, any development of new technologies and strategies of injection and storage that contribute to solving these problems is crucial for making geological storage an economical and technically feasible alternative of $CO_2$ sequestration.

The idea of injecting dissolved $CO_2$ or other dissolved gases is recent, but not new, for example: Jackson (2008), PCT application number WO 2008/058298; Blount et al. (2010), US Patent 2010/0170674; Kresnyak and Bunio (2010), US Patent number 7,770,640; Constantz et al. (2011), PCT application number WO 2011/017609.

PCT WO 2008/058298 proposes injecting $CO_2$ dissolved in brine or water and contacting the latter with a multi-component gaseous mixture (which can contain $H_2S$, $SO_2$, $N_2$, water vapor and other impurities, and which can come, for example, from capture operations or directly from combustion gases). The desired amount of $CO_2$ is obtained by adjusting the flow rates of the water and gas that are contacted for mixing and dissolving the gases. The contribution of this patent is a method for monitoring and verifying the phase state of the injected fluid at the reservoir level, thus reducing the uncertainties with respect to the degree of gas saturation of the injected liquid, and therefore improving the control of operational variables (flow rates of water and gas that are mixed before injection). However, the proposed system does not describe how to dissolve the gas.

In general, $CO_2$ storage methods are divided between those that promote physical contact of the aqueous phase or injection water and the gaseous phase or $CO_2$ at surface, for example, Drijver (2009), PCT application no. WO 2009/061187; or through the injection well, for example, Constantz et al. (2011), PCT application no. WO 2011/017609.

PCT application no. WO 2009/061187, for example, proposes a method in which gaseous $CO_2$ is mixed at the surface with a liquid (water, brine, seawater, river water, etc.) in a given proportion. As the gas-liquid mixture flows downward through the injection tubing (only one tube), the $CO_2$ dissolves due to the effect of the pressure. In addition to the fact that the method is applicable only to the injection of pure $CO_2$, it must be taken into account that the two-phase flow through the injection conduit requires compressing both the water (brine) and the $CO_2$, therefore the energy cost is very high.

Among the methods in which the gas and brine are injected separately, those proposed by Koide and Shinoda (2009), US Patent 2009/0202304, and Koide and Shinoda (2011), US Patent 2011/0017456 stand out. Patent US 2009/0202304 proposes an injection well made up of two concentric conduits: an inner conduit for injecting gaseous $CO_2$ and an outer conduit for injecting liquid or water. The $CO_2$ and the injection water are mixed by injecting micro-bubbles of gaseous $CO_2$. The mixing is achieved with a nozzle whereby the injection water is sprayed and the micro-bubbles of $CO_2$ are created. This well, however, does not include cooling the system to favor the $CO_2$ dissolution even more, it is not applicable to mixtures and it does not prevent bubbles from entering the storage aquifer. In addition, in the method of Patent US 2011/0017456 the $CO_2$ is injected in liquid state and is mixed with the injection water by means of a rotary cylinder.

The only method for storing gases and brine with non-soluble gas recovery corresponds to Blount et al. (2010), US Patent No. 2010/0170674, which proposes injecting a $CO_2$-rich gaseous mixture coming from a capture phase. The injection well does not include an independent brine or water injection conduit. The brine is introduced into the well where it is kept at a fixed level. A tower or a multiple-stage gas absorption-separation system is deployed within the well. The gas is injected through an independent conduit parallel to this unit, from which conduit branches connecting to each absorption step outlet. The brine enters the absorption unit through the top and contacts the counter-current rising gas flow. As the liquid descends, it is gradually enriched with $CO_2$ (and with the more soluble gases). The non-soluble gases are extracted by means of another independent conduit parallel to the absorption unit and the gas supply line and are directed at the surface to an energy recovery system. The system makes use of the pressure of the water column to discharge the $CO_2$ enriched liquid which reaches the bottom of the well in the aquifer. The $CO_2$ dissolution takes place sequentially in steps before reaching the bottom of the well. In other words, to some extent, US Patent 2010/0170674 proposes a method for injecting already dissolved $CO_2$. Furthermore, the method needs a barrier (packer) to prevent the water column within the well from being contaminated with the gases dissolved in the liquid which is injected into the aquifer. The system has several drawbacks: it does not allow controlling the brine pressure and hence the amount

of dissolved $CO_2$; it is restricted to very $CO_2$-rich mixtures to inject only low concentrations of dissolved $CO_2$; it does not specify how the gas absorption and the separation of non-soluble gases are done.

None of the above methods describes an effective methodology for mixing and separating non-soluble gases and recovering energy from these gases, and none of the current methods of $CO_2$ storage promotes an enhancement of the dissolution by means of cooling the medium. Likewise, methods deploying unit operations aimed at improving the contact between the liquid and gaseous phases at the reservoir level are scarce, and the few that can be found in the state of the art use simple mixing mechanisms of low efficiency. Finally, currently there is no method which allows the simultaneous injection of $CO_2$ dissolved in the injection water or brine, liquid $CO_2$, supercritical $CO_2$ and/or a multi-component $CO_2$-rich gaseous stream. The present invention meets all these characteristics that are favorable and advantageous for intensifying the $CO_2$ capture and storage processes. The specific objective of the present invention is to propose a method for storing $CO_2$ which solves the technical problems currently affecting the geological storage of $CO_2$.

## Description of the Invention

To overcome some difficulties associated with standard $CO_2$ storage systems, an alternative method is proposed which involves separately injecting an aqueous stream of brine or injection water, and separately injecting a multi-component $CO_2$- rich gaseous stream or even a pure $CO_2$ stream. Hereafter, this gaseous stream is called "gases".

The present invention describes *a method for storing soluble gases in permeable geological formations which comprises the following steps:*

> *a) extracting brine or salt water from the sea or from an aquifer, or, if the permeable geological formation for storage is an aquifer, from the aquifer itself, at a point located at a higher hydraulic elevation than the injection point,*
> *b) injecting the brine or water into the permeable geological formation,*
> *c) compressing the gases formed by pure $CO_2$ or $CO_2$ plus other soluble and non-soluble gases,*
> *d) injecting the gases in the permeable geological formation, and*
> *e) if the gases are formed by $CO_2$ plus other at least non-soluble gases, recovering the energy from the non-dissolved gases.*

The different phases, i.e., aqueous brine or water stream and on the other hand the gases, are injected separately and put in contact at the level of the permeable geological formation. The expression "permeable geological formation" refers to any reservoir, aquifer or storage facility with suitable characteristics for introducing $CO_2$ or dissolved $CO_2$, and which is covered, at least on top, by an impermeable geological formation, also called "seal" or "caprock". "Injecting into the permeable geological formation" is mentioned to indicate that the mixture of the injected phases or fluids (i.e., the soluble gases dissolved in brine or water) enters and is stored in the permeable geological formation, although this mixture has been done above or below the inlet point of said formation.

The extraction point of the brine or salt water is:

- either from the sea if it is more economical than the extraction from an aquifer or because it is located close by,
- or from an aquifer at a distance such that the extraction is profitable, for example not very far from the injection point or even on the vertical of the permeable geological formation to be injected, it is especially advantageous when this aquifer is in communication with said formation,
- or, since the permeable geological formation for storage can be an aquifer, the extraction point of brine or salt water is from the aquifer itself into which it will be subsequently injected at a point located at a higher hydraulic elevation than the injection point. This is done for two reasons: first, to prevent extracting brine or salt water with dissolved $CO_2$ previously injected into the aquifer; and second, for a significant reduction of the risk of leakages, eliminating the requirements of the caprock formation.

The invention is based on different concepts: injection of $CO_2$ dissolved into the permeable geological formation; the injection-dissolution; and extraction of energy from the non-dissolved gases if $CO_2$ plus other gases are injected and there are at least non-soluble gases.

In particular embodiments of the invention the steps to be followed are: extracting brine or salt water from the permeable geological formation at a point located at a higher hydraulic elevation than the injection point, or from an aquifer located on the vertical of the permeable geological formation, especially when these are communicated; cooling the brine, which is particularly relevant if the extraction is from the same permeable geological formation for storing, and adding other solutes to increase $CO_2$ solubility (and that of other soluble gases); injecting the brine and the $CO_2$ (or gas mixture); dissolving the $CO_2$ in the brine. This brine is denser than that of the aquifer (because in this embodiment it has been cooled and because dissolved $CO_2$ increases the water density). Therefore, it will tend to sink towards the deepest parts of the aquifer. In the same or another embodiment of the invention the method comprises injecting both flue gases and supercritical $CO_2$. A multi-component gaseous stream is injected through a pipe or conduit, and the cold brine or water through another. In a particular embodiment combinable with the above, these two streams are contacted in a mixing device which accelerates the dissolution of $CO_2$ (and other soluble components) in the brine or water. The brine or water (saturated in $CO_2$ and the other gases at the injection pressure) flows through the well towards the grooved section of the piping of the injection well through where it enters the permeable geological formation. The non-soluble components, in the case of having injected gases made up of $CO_2$ and other at least non-soluble gases, will form a phase less dense than the brine or water, which will tend to float and rise in comparison with the injected brine or water stream (cold brine). The non-soluble gases flow towards and are accumulated in the wellhead. Extracting these non-soluble gases through a pipe parallel to the injection well would also be possible in another embodiment. Finally, these gases, if any, are extracted for recovering energy.

The present invention also comprises a system for storing *soluble gases in permeable geological formations comprising:*

- *extraction means adapted for extracting brine or salt Water from the sea, or from an aquifer or, if the permeable geological formation for storage is an aquifer, from the aquifer itself, at a brine or water extraction point located at a higher hydraulic elevation than the injection point,*
- *a conditioning system for conditioning the brine or injection water,*
- *at least one gas compression system for compressing gases formed by pure $CO_2$ or $CO_2$ plus other soluble and non-soluble gases,*
- *an injection well with piping, with a conduit system which in turn comprises:*

  o *at least one conduit suitable for injecting gases, reaching at least the depth of a permeable geological formation suitable for storing $CO_2$ and other soluble gases,*
  o *at least one conduit suitable for injecting brine or water, and*

- *an energy recovery system for recovering energy from the rising non-dissolved gases, if the gases are formed by $CO_2$ plus other at least non-soluble gases.*

To facilitate compression, the at least one conduit suitable for injecting gases will be called the gas injection conduit in the following, and the at least one conduit suitable for injecting brine or water will be called brine or water injection conduit.

It is indicated that a conduit reaches at least the depth of a permeable geological formation to refer to the fact that said conduit has a minimum depth a few meters above the inlet to the permeable geological formation in which the dissolved $CO_2$ will be stored and it can also reach a depth greater than said inlet.

The advantages of the system proposed with respect to the conventional supercritical $CO_2$ injection and storage systems are translated, on one hand, into a significant reduction of the risk of leakages, relaxing the requirements for the caprock formation. On the other hand, in the embodiment of the invention in which the brine or water of the conditioning system for conditioning brine or injection water is extracted from the same permeable geological formation (in this case, an aquifer) in which the brine or water and the $CO_2$ will later be injected, the extraction of brine or water would prevent the increase of the interstitial pressures at a regional scale. This not only reduces the risk of contaminating the nearest water bodies, but rather also reduces the compressing costs. Finally, the system is applicable to any source of combustion gases without excessive costs. In other words, the need of capturing $CO_2$ is eliminated and credits are assigned by eliminating other greenhouse gases ($CH_4$, $SO_x$, $NO_x$), in the case of injecting a stream with gases of this type.

All the features included in this document (including the claims, the description and the drawings) and/or all the steps of the method described can be joined in any combination, with the exception of combinations of mutually excluding features and/or steps.

*Description of the Drawings*

These and other features and advantages of the invention will be more clearly shown from the detailed description of different preferred embodiments that follow given solely by way of non-limiting illustrative examples with reference to the attached drawings.

Figure 1 shows an example of the whole system for storing dissolved gases in permeable geological formations.
Figure 2 shows conventional storage of supercritical $CO_2$ and some of the difficulties that must be overcome, where the overpressure is very large and extends over long distances, which is seen in its respective pressure-distance graph.

Figure 3 shows the injection of dissolved gases according to the present invention, the overpressure only affects a small part of the aquifer, which eliminates the risks on the caprock formation and of $CO_2$ or brine leakages, which is seen in its respective pressure-distance graph.

Figure 4 shows an example of the system for storing soluble gases in permeable geological formations where the energy recovery system and the at least one gas compression system are integrated in a turbo-compressor combined system, which allow harnessing the energy from the non-soluble gases for compressing the injection gases.

Figure 5 show the main components of the $CO_2$ injection-dissolution well according to different embodiments and general scheme of its operation.

Figure 5 (a) shows the well with a brine or water injection conduit and two gas injection conduits.

Figure 5 (b) shows the well with two pairs of brine or water injection conduits and two conduits for injecting gas with nozzles for creating gas microbubbles.

Figure 5 (c) shows the well with a static phase mixer, in this example of Kenics type, at the end of the gas injection conduits and the brine or water injection conduits.

Figure 6 shows another embodiment of the system for storing soluble gases with injection of a $CO_2$-rich multi-component gaseous mixture. In this embodiment, the phases are mixed below the permeable geological formation and a filter is used at the inlet of the latter.

Figure 7 shows another embodiment of the system for storing soluble gases with a $CO_2$ injection-dissolution well with dynamic mixer: HiGee type centrifugal gas absorber, in this example above the inlet of the permeable geological formation.

Figure 8 shows another embodiment of the system for storing soluble gases with a $CO_2$ injection-dissolution well with dynamic mixer: HiGee type centrifugal gas absorber, in this example located below the inlet of the permeable geological formation. The embodiment of the inlet filter which prevents the passage of non-soluble gases to the permeable geological formation is observed more in detail.

Figure 9 shows another embodiment of the system for storing soluble gases with a $CO_2$ injection-dissolution well with dynamic rotating cylinder mixer and cooling coil and injection of liquid $CO_2$. In this example the mixing mechanism is located above the inlet of the permeable geological formation.

## Detailed Description of the Invention

A method for storing $CO_2$ in permeable geological formations (6) based on a concept of injection well (3) and dissolution of $CO_2$ is presented.

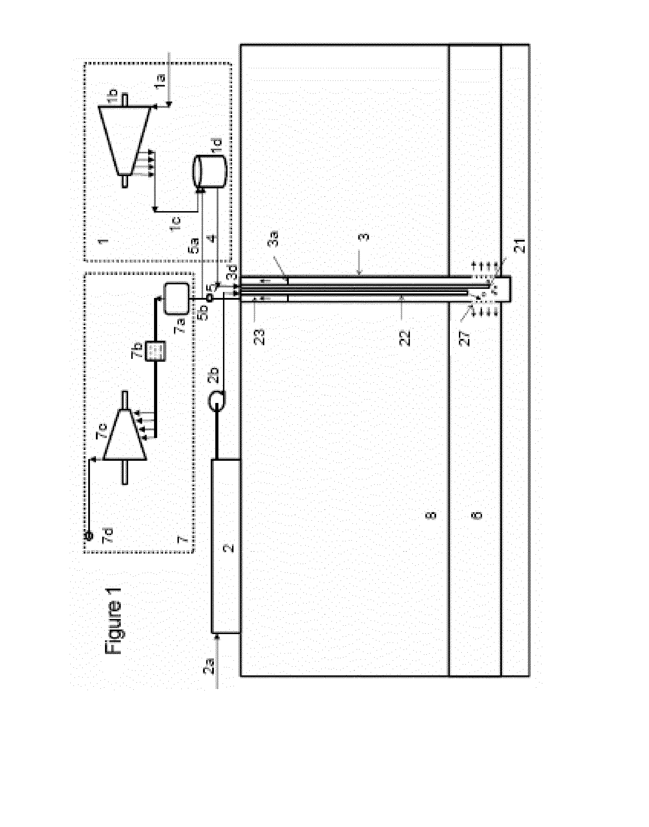

This method comprises separately injecting the gases, which can be a multi-component gas stream (e.g., flue gases) or pure $CO_2$, and a brine or water stream, through an injection well (3) containing at least two conduits: a gas injection conduit (21) and a brine or water injection conduit (22). These two streams are mixed at a depth such that the $CO_2$ and, optionally, other greenhouse gases are dissolved in the brine or water (in an embodiment cooled and at high pressure) whereas the less soluble gases, in the case of not being the gases pure $CO_2$, rise to the surface, where its energy is recovered. A general scheme of the method is carried out by a system as that shown in Figure 1, comprising the following components:

● a gas compression system (1);

● a conditioning system (2) for conditioning brine or injection water (in different embodiments:

cooling, adding alkaline material, etc.);

● a $CO_2$ injection-dissolution well (3) made up of at least two conduits: one of them must allow the injection of the fluid to be dissolved (combustion gases, supercritical $CO_2$, liquid $CO_2$), the another must allow the injection of the dissolving fluid (brine or water);

● a permeable geological formation (6) for storing $CO_2$; and

● an energy recovery system (7) for recovering energy from non-soluble gases which exit, in this embodiment, as it contains $CO_2$ and non-soluble gases, through the wellhead (3d).

The gas compression system (1) comprises in an embodiment, one (or several) compressor (1b) of injection gases and a gas containing vessel (1d). To inject supercritical $CO_2$ or liquid $CO_2$ independent vessels must also be provided.

The conditioning system (2) for conditioning brine or injection water is adapted to receive the brine or the water extracted:

- either from an aquifer located at a point away from the injection well (3) or located on the vertical of the injection well (3), at lower depth than that of the permeable geological formation (6) for storage, preferably when the aquifer is in communication with said formation (6),
- or from the sea,
- or, if the permeable geological formation (6) is an aquifer, from the same aquifer for storage at a point that cannot be reached by the water injected during the operation of the system.

Throughout the description the name permeable geological formation (6) or aquifer will be used regardless of whether the latter initially contains water or brine.

The conditioning system (2) for conditioning brine or injection water in an embodiment comprises a booster pump (2b). This sub-system has a brine or water inlet line (2a). The conditioning of the brine or injection water can be included in different embodiments, among other operations: adding alkaline material to increase $CO_2$ solubility and to promote chemical reactions at the level of the permeable geological formation (6) favoring the structural trapping of the $CO_2$ (e.g. sodium hydroxide), or cooling the brine or injection water to favor the dissolution of the gases, or even adding biocide. In the case of cooling it, the step of cooling the brine or salt water is used for extracting the energy coming from this medium in the form of heat. An inlet line (2a) of brine or water extracted by the same injection-dissolution well (3) from an aquifer which is above the permeable geological formation (6) for storage, preferably when the aquifer is in communication with said formation (6) can also be included.

The system proposed allows injecting both the combustion gases (e.g., of a thermal power plant), mixtures of $CO_2$-enriched gases (e.g., coming from a cement industry processes) or pure $CO_2$.

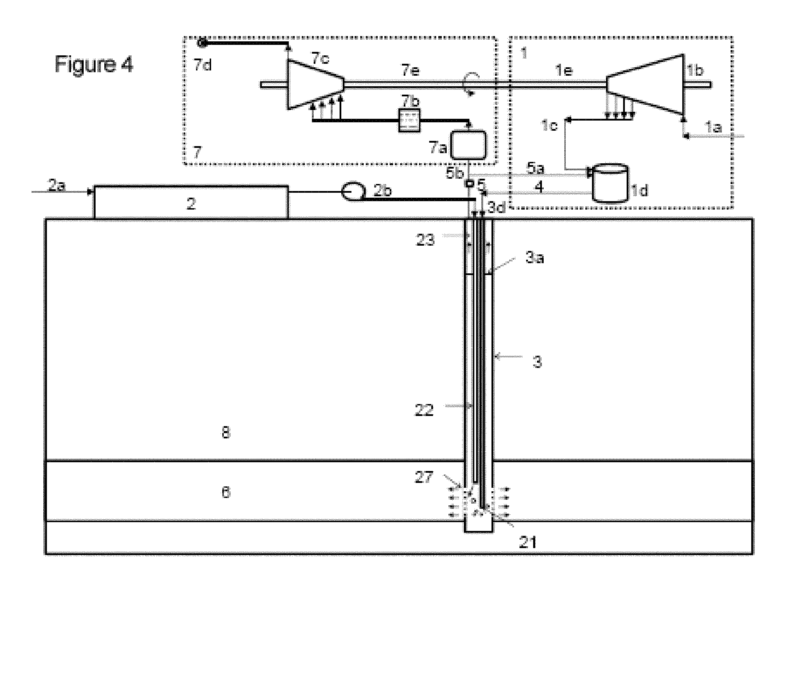

The energy recovery system (7) for recovering energy from the non-soluble gases, if the gases are formed by $CO_2$ plus other at least non-soluble gases is shown in Figures 1 and 4. The energy recovery system (7) in an embodiment of the invention comprises a dehumidifier (7a), one or several heaters (7b), and a turbine system (7c) for the energy recovery from the non-soluble gases.

In an embodiment, as depicted in Figure 4, the energy recovery system (7) and the gas compression system (1) are integrated in a turbo-compressor combined system. For such purpose, it is enough to only connect the shaft (7e) of the turbine (7c) with the shaft (1e) of the compressor (1b) as shown in the Figure 4. This configuration allows optimizing the energy yield of the process, harnessing the energy from the non-soluble gases for compressing the injection gases.

In an embodiment there is arranged a recirculation line (5a) for recirculating the insoluble gases feeding the gas containing vessel (1d). This line will be provided with a meter-actuator (5) to determine the composition of the gas stream and a switch valve for controlling the direction of the stream. When the concentration of $CO_2$ falls below a certain level, the valve will direct the stream towards the energy recovery system (7). Otherwise, the gas stream is recirculated to the gas containing vessel (1d) for its re-injection into the injection well (3).

Different steps which will be described below are provided in the different embodiments.

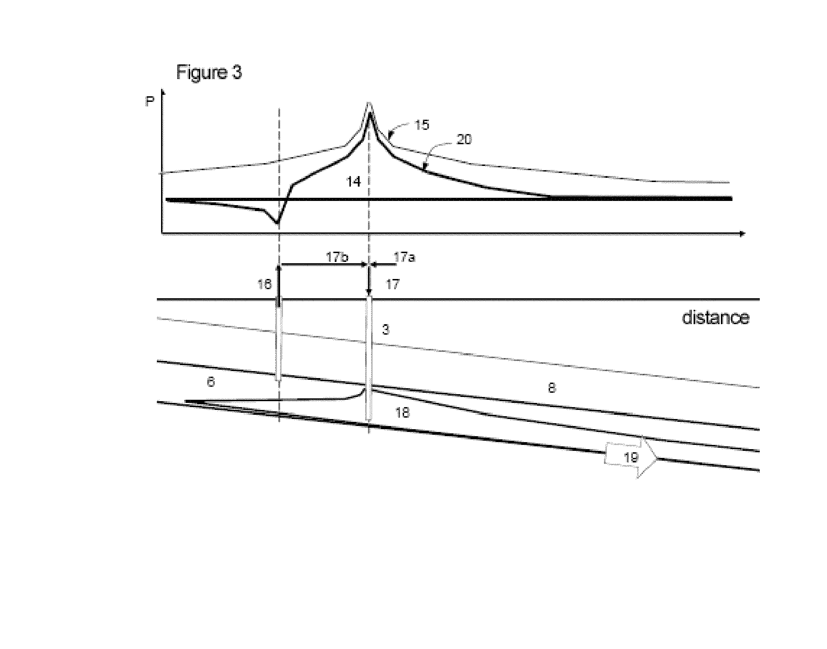

Extracting salt water from the formation, if the permeable geological formation (6) is an aquifer, at a brine or water extraction point (16) located at a higher hydraulic elevation than the injection point (17), as depicted in the Figure 3.

In order to improve the efficiency of the system (to increase $CO_2$ solubility, but, depending on the conditions, also in a particular embodiment extracting the geothermal energy of the salt water) in an embodiment, cooling the salt water in the conditioning system (2) for conditioning brine or injection water depicted in Figures 1 and 4 and, optionally, adding compounds to increase $CO_2$ solubility.

Figure 2 schematizes the conventional storage method of supercritical $CO_2$ and some of the difficulties which must be overcome. In its respective pressure versus distance graph, it is seen that the overpressure is very large and extends over long distances, which can cause the rupture of the caprock formation and $CO_2$ leakages. As has been mentioned, the space to be occupied by the $CO_2$ is essentially obtained from compressing the fluids and expanding the pores of the aquifer, which increases the pressure of the fluids, increasing the energy cost of the storage and compromising the mechanical stability of the caprock (8), and displacing the resident water in the permeable geological formation (6) if it is an aquifer, which in the mid-term involves contaminating the groundwater and/or surface water of the area as depicted in Figure 2. In the long term, the $CO_2$ will be dissolved in the water of the aquifer and the risk disappears, but the time needed is uncertain and it can be very long. Figure 2 shows a possible anticlinal configuration of the permeable geological formation (6) and of the caprock formation (8) above. Upon injecting the $CO_2$ the initial pressure (14) of the system increases. This increase is associated with the distribution of the $CO_2$ bubble and $CO_2$ plume dissolved in the resident brine of the aquifer (9), and is reflected in the pressure versus distance graph as an overpressure (15) with respect to the initial pressure (14). This overpressure (15) caused by the injection of $CO_2$ extends over long distances there is therefore a risk of rupturing the caprock (13) which can cause a $CO_2$ leak towards surface aquifers (10), or cause a $CO_2$ leak through the aquifer (12), or a brine leakage (11).

These problems are solved in an embodiment of the invention by injecting the brine or the water with the $CO_2$

and other dissolved gases into the permeable geological formation (6) and extracting brine or water from the same permeable geological formation (6), as depicted in Figure 3. Figure 3 also shows a possible anticlinal configuration of the permeable geological formation (6) and the caprock formation (8). In this case, since brine or water is extracted from the same permeable formation (6) and the $CO_2$ and other soluble gases are injected dissolved, the overpressure caused by the method of storage (20), is significantly less than the overpressure (15) caused by the conventional storage of $CO_2$ (Figure 2), as reflected in the pressure versus distance graph. In an embodiment of the invention, the brine or water coming from the permeable geological formation (6), if this formation (6) is an aquifer, is obtained from the brine or water extraction point (16). The brine or water with dissolved $CO_2$ (18) is denser than that of the aquifer (because in an embodiment it has been cooled and because the dissolved $CO_2$ increases the water density). Therefore, after introducing it in the injection point (17) of gases (17a) and brine or water (17b), the brine or water of the aquifer with dissolved $CO_2$ (18) will tend to sink (19) towards the deepest parts of the permeable geological formation (6) as schematized in Figure 3.

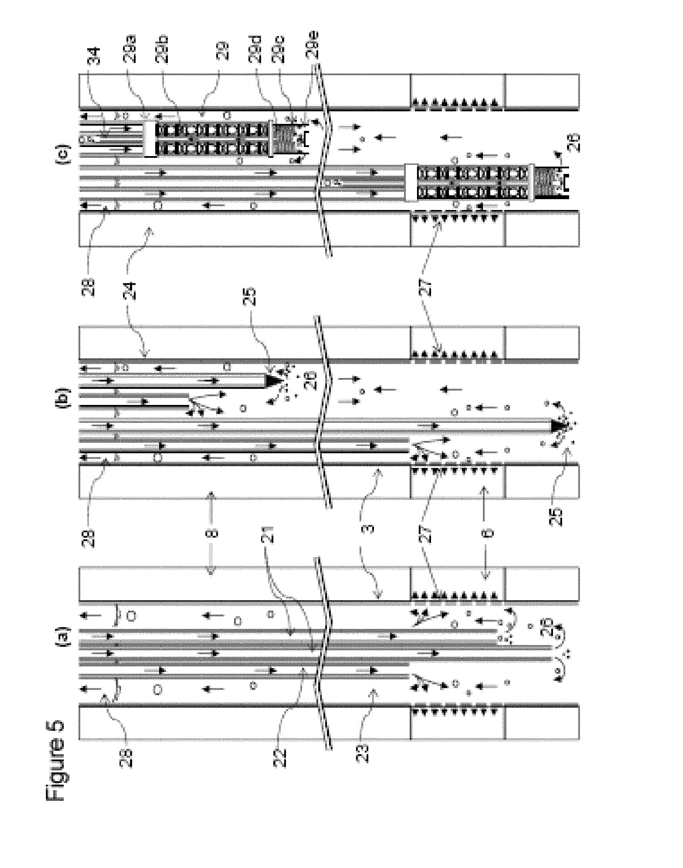

The optimal way to dissolve the gases depends on their composition. If there is a prior process of $CO_2$ capture, the $CO_2$ is injected in a dense state, liquid or supercritical phase, through a gas injection conduit (21) as depicted in Figure 5 which reaches a depth close to the ceiling of the permeable geological formation (6). The efficiency can be improved with several conduits; Figure 5a shows an embodiment with two gas injection conduits (21) and a brine or water injection conduit (22).

Inside the piping there is at least one gas injection conduit (21) (Figure 5a), which in this embodiment reaches the depth of the permeable geological formation (6) where the $CO_2$ will be injected and stored. Through this gas injection conduit (21) the gas (pure $CO_2$, $CO_2$ with impurities or combustion gases) is injected. Inside the piping there is also at least one brine or water injection conduit (22) through which the brine (preferably the brine which has been extracted from the aquifer to prevent overpressure) is injected. In the simplest embodiment, this brine or water injection conduit (22) will reach a few meters above the lower end of the gas injection conduit (21). Since the injected gases are lighter than the salt water, they will tend to float and rise in counter-current with the salt water stream which is injected through the brine or water injection conduit/conduits (22). In this process, the $CO_2$ (and, where appropriate, the most soluble components of the flue gas) will be dissolved (26) through the annular space (23), as shown in Figure 5.

If the gases are made up of at least $CO_2$ plus non-soluble gases, the non-soluble gases will be extracted through the annular space (23) between the brine or water injection conduits (22), the gas injection conduits (21) and the piping (Figure 5).

The gas injection conduit (21) must preferably be made of corrosion resistant material (e.g., fiberglass, 12Cr or 22Cr steel). It can also be coated on the inside with a strong and anti-corrosive material (e.g., glass fiber, epoxy resins, fluorinated cement, etc.).

In another embodiment, the system can be made up of several pairs of injection conduits (24) like those described in previous sections. Each of these pairs of conduits will reach different depths. Figure 5b shows two of these pairs of conduits. This arrangement allows improving the energy efficiency of compression throughout the well. In an embodiment of the invention as depicted in Figure 5b, the gas injection conduits (21) will be provided with nozzles (25) at their lower end for injecting the gas in the form of mini-bubbles.

The $CO_2$-saturated brine or water at the injection pressure (where appropriate, partial) flows towards the grooved piping section (27) (Figures 1, 4, 5 and 6) through where it enters the permeable geological formation (6).

To improve the gas dissolution into brine or water, the additional step of mixing the injected gas with the water is added in different embodiments, as depicted in Figures 1, and 4 to 9. This operation can be performed in several manners included in the different embodiments.

When a mixture with non-soluble gases is injected, in order to cause the dissolution of the soluble components and also to extract the non-soluble components, in the embodiments which will be described below mixing mechanisms or mixers (29) like the one indicated in Figure 5c are used. As shown in Figure 5, the non-soluble gases (28) (essentially $N_2$ and a fraction of $NO_x$) flow towards the wellhead (3d) (Figures 1, 4 and 6) where they accumulate at a pressure of the order of $P_{g,ns} = P_g - P_{g,s} - \Delta P_g$ wherein $P_g$ is the injection pressure at the wellhead (3d) (Figure 1, 4 and 6), $P_{g,s}$ is the partial pressure of the soluble fraction, and $\Delta P_g$ is the head loss through the conduit and mixing elements. If the combustion gases are directly injected, the energy viability of the system requires recovering this energy, which can represent from the order of 20% to 80% of that consumed during compression.

The efficiency of the system, especially if a mixture of gases is injected, is enhanced by means of using a mixing mechanism (29) located just above or just below the grooved piping section (27) (Figure 5c and hereinafter) at the level of the permeable geological formation (6). In different embodiments which will be seen further below the mixing mechanism (29) is provided with autonomous cooling system, which improves the yield of the operation even more.

The amount of dissolved $CO_2$ can be estimated by means of a simple gas-liquid equilibrium calculation. When a multi-component gaseous mixture is contacted with brine or water, the mass of gaseous species which are dissolved in the brine or water can be determined from the equilibrium equations:

$$\phi_i y_i P = \gamma_i x_i K_i \exp\left(-\frac{(P-P_o)}{RT}\overline{V_i}\right) \qquad i = 1,...,N$$

wherein $y_i$ represents the molar fraction in the gas of the i-th species, $\phi_i$ is the fugacity coefficient of the species, $x_i$ represents the molar fraction of species dissolved in brine, $\gamma_i$ its activity coefficient, $K_i$ the equilibrium constant, $V_i$ the partial molar volume of the species, $P$ and $T$ are the pressure and the temperature of the system, respectively. The fugacity and activity coefficients depend on the temperature, the pressure and the composition, and are calculated from an equation of state (EOS) and a series of mixture rules. The equilibrium constants also depend on the temperature.

When pure supercritical $CO_2$ is injected at a temperature of 60°C and a pressure of 150 bars, the dissolution of $CO_2$ in a brine (NaCl) with a salinity of 4 M is 3.2% w/w (Spycher and Pruess, 2005. CO2-H2O mixtures in the geological sequestration of CO2. II. Partitioning in chloride brines at 12-100 °C and up to 600 bar. Geochimica et Cosmochimica Acta 69(13), 3309-3320). If the temperature is reduced to 30 °C, then $CO_2$ solubility increases to 3.6% w/w. If the temperature lowers to 10°C then the amount of dissolved $CO_2$ increases to 3.8% w/w. In other words, $CO_2$ solubility increases between 12 and 8% (approximately 21% of increase upon lowering the temperature from 60 to 10 °C) for every temperature reduction of 30°C.

To evaluate how much $CO_2$ can be dissolved in the resident brine of an aquifer upon injecting a $CO_2$-rich multi-component gaseous mixture, the mentioned equilibrium equation system has been solved by assuming the EOS of Redlich-Kwong to calculate the fugacity coefficients (Redlich and Kwong, 1949. On the thermodynamics of solutions. V. An equation of state. Fugacities of gaseous solutions. Chem. Rev. 44, 233-244; Praunitz et al., 1986. Molecular thermodynamics of fluid phase equilibria. Prentice Hall, New York), and the Pitzer model for calculating activities (Pitzer, 1973. Thermodynamics of electrolytes. I. Theoretical basis and general equations. Journal of Physical Chemistry 77(2), 268-277). The equilibrium constants have been extracted from the literature (The NIST Chemistry WebBook, http://webbook.nist.gov/chemistry; Sander, 1999. Compilation of Henry's law constants for inorganic and organic species of potential importance in environmental chemistry. http://www.mpch-mainz.mpg.de/~sander/res/henry.html). If a flue gas stream with a typical approximate composition (percentage by weight) of 74.02% $N_2$, 14.3% $CO_2$, 6.5% $H_2O$, 5% $O_2$, 0.07% $SO_2$, 0.04% $NO_2$, 0.02% CO, 0.03% $CH_4$ 0.01% Ar, 0.01% $C_4H_{10}$ is injected, then the amount of $CO_2$ that can be dissolved at 60°C and 150 bars in brine (NaCl) with salinity 4 M is 0.36% w/w. By reducing the temperature to 30°C the dissolution of the $CO_2$ would increase to 0.57% w/w. If the temperature is reduced to 10°C, the amount of dissolved $CO_2$ increases to 0.84% w/w. In relative terms, the effect of reducing the temperature on the dissolution of the $CO_2$ is greater by injecting a $CO_2$-rich gaseous mixture than injecting pure supercritical $CO_2$. For every 30°C reduction of the temperature of the medium, $CO_2$ solubility increases between 58 and 48% (increasing between 105 and 133% by lowering the temperature from 60 to 10°C). In addition, at 30 and 10°C the amount of dissolved $SO_2$ is less than half the dissolved $CO_2$. The above indicates that, comparatively, the direct injection of the flue gases with cooling of the medium has the potential of becoming a strategy which would allow dissolving, by itself, up to 26% of that which would be obtained in a conventional storage operation. Likewise, it can be considered as industrial application or alternative to $CO_2$ separation in the capture process, because the method would allow injecting the flue gases directly.

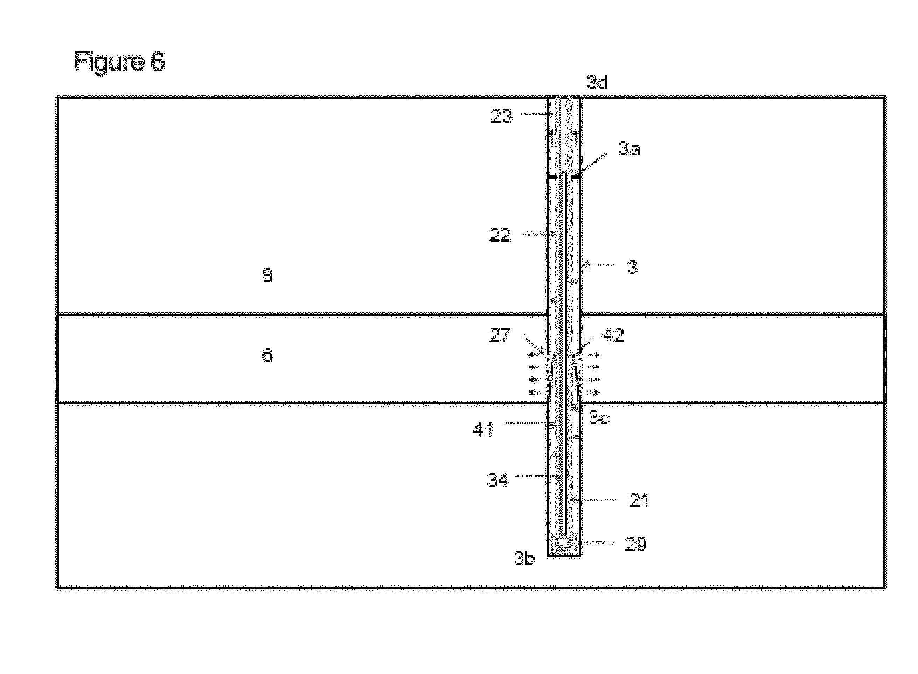

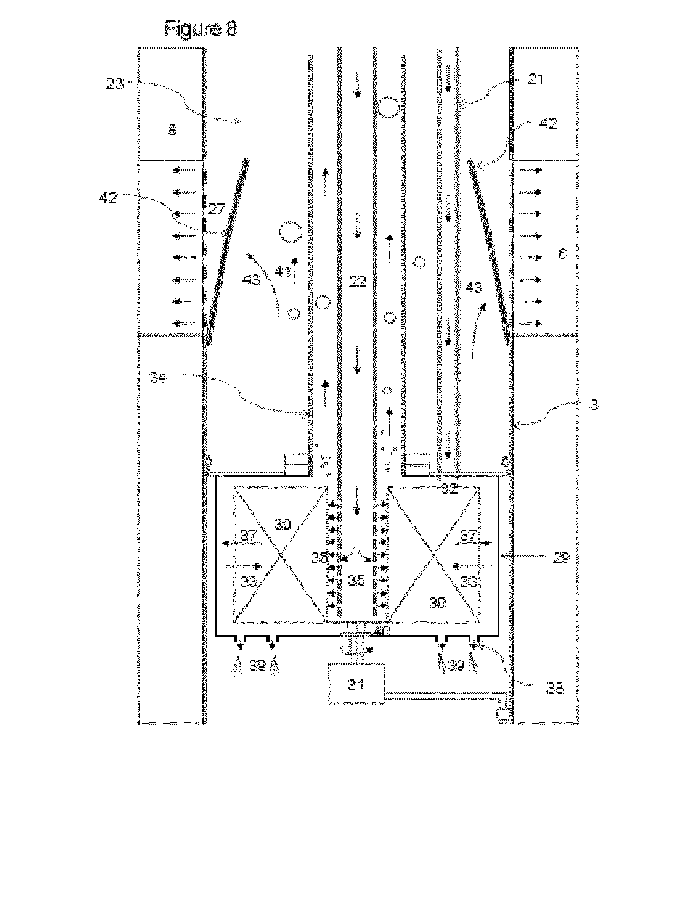

In order for the injection of a multi-component gaseous mixture with a relatively low proportion of $CO_2$ to produce a brine with levels of dissolved $CO_2$ similar to those obtained by means of conventional storage, pressurizing the brine is required, which involves an elevated energy cost. To prevent this drawback, in an embodiment of the invention, the mixing mechanism (29) will be located below the permeable geological formation (6), as shown in Figures 6 and 8.

It is plausible to assume that the injection pressure of the gaseous mixture at the surface (i.e., at the inlet of the gas injection conduits (21)) is of the order of 120 to 130 bars. If the mixing mechanism (29) is located at the bottom of the well (3b), for example at a depth of 2000 m, the injected brine or water and the gas will reach an approximate pressure of 200 bars. Without the loss of generality, if it is assumed that the proportion of $CO_2$ in the injected gas stream is 50%, at that depth, both the partial pressure of the $CO_2$ and that of the fraction of less soluble gases $P_{g,ns}$ will be 100 bars. The $CO_2$ will be dissolved and the insoluble fraction will be compressed up to 200 bars. As the bubbles of non-soluble gases rise (41), they reach the level of depth of the bottom of the storage aquifer (3c). If this depth is located at 1200 m, the pressure of the brine or water will be 120 bars, like that of the non-soluble expanded gases, whereas the $CO_2$ is dissolved at the pressure of 100 bars. If, for example, the aqueous phase-non-soluble gases interface (3a) is at a depth of 1150 m, the pressure of the non-soluble gases accumulated at the wellhead (3d) can be estimated by solving the conservation equations of mass, momentum and energy through the injection well (3) and the conduits (21, 22) of the well. In steady state, for a gas injection flow rate equivalent to 1.0 kg $CO_2$/s, with a geothermal gradient of 0.02 K/m, a surface temperature of 10°C, an overall heat transfer coefficient of 5.0 W/m², the pressure reached by the non-soluble gases at the wellhead (3d) will be approximately 58 bars, representing the order of 46% of the surface injection pressure.

In other words, the increase of injection pressure caused by the non-soluble gases is recovered. In reality, the yield will be slightly lower due to the head losses, and to the cooling produced by the cold brine, necessary for improving the solubility of the gases.

As mentioned, the efficiency of the system, especially if a mixture of gases is injected, is improved by means of using a mixing mechanism (29), therefore in a preferred embodiment, the system will have a mixing mechanism (29) located at the level of the permeable geological formation (6) to create turbulence and to enhance the mass transfer (increase of $CO_2$ dissolution). For such purpose, the mixer (29) can be a static mixer (e.g., Kenics type) or a dynamic mixer (e.g., rotating cylinder mixer, mini stirred tank, centrifugal gas mini-mixer, etc.).

In an embodiment of the invention the mixing mechanism (29) comprises a static mixer (29) (e.g., of Kenics type; Tajima et al., 2004. Continuous formation of CO2 hydrate via a Kenics-type static mixer. Energy and Fuels 18, 1451-1456; Tajima et al., 2005. Effects of mixing functions of static mixers on the formation of CO2 hydrate from the two-phase flow of liquid CO2 and water. Energy and Fuels 19, 2364-2370), as illustrated in Figure 5c. In this case, the gas injection conduit/conduits (21) and the brine or water conduit/conduits (22) connect to the mixer (29) or, optionally to a phase pre-mixing chamber (29a). The fluid enters the mixing chamber, a crown-shaped cylindrical casing, which in an embodiment has inside thereof blades (29b) which cause the mixing of the phases and, consequently, the dissolution of the $CO_2$ (and the more soluble gases) in the brine or water. The two fluids or, where appropriate, the mixed fluid leaves through the bottom of the chamber and is introduced into a separator element (29d), for example coil, a helix or mini-hydrocyclone, etc., which, by centrifugal effect, promotes the separation of the $CO_2$-enriched brine from the non-soluble gases. These, in the form of bubbles, are extracted through a central conduit (34) passing between the separator element (29d), through the annular space of the mixing chamber and between the gas injection conduit/conduits (21) and the brine or water conduit/conduits (22), such as shown in Figure 5c. The upper end of the non-soluble gas extraction conduit (34) will be located at a level which depends on the depth reached by the pair of fluid injection tubings (24). In any case, it would be advisable that this level is located above the level of the permeable geological formation (6) to prevent or minimize the entrance of insoluble gas bubbles in the permeable geological formation (6). In those embodiments in which the mixer (29) is located below the permeable geological formation (6), the upper end of the non-soluble gas extraction conduit (34) will preferably be located above the level of liquid in the annular space (3a). The $CO_2$-enriched brine (and the more soluble gases) leaves through openings (29e), where appropriate, arranged at the bottom of the phase separation chamber (29c).

Thus, in the case of a static mixer (29), the present invention describes a system characterized in that the static mixer (29) comprises:

● the gas injection conduits (21) and the brine or water injection conduits (22), which are connected to the mixer (29) or, optionally, to a phase pre-mixing chamber (29a),
● a mixing chamber, in which the fluid enters and which optionally comprises in its inside blades (29b) which cause the mixing of the phases and the dissolution of the more soluble gases in the brine or the water,
● a separator element (29d) through which the fluids or, where appropriate, the mixed fluid leaving the bottom of the chamber, which, due to centrifugal effect, promotes the separation of the $CO_2$-enriched brine or water from the non-soluble gases are introduced,
● a non-soluble gas extraction conduit (34), the upper end of which is located at a level which depends on the depth reached by the pair of fluid injection tubings (24), preferably, this level is located above the level of the permeable geological formation (6) for storage, to prevent and minimize the entrance of bubbles of non-soluble gases in the permeable geological formation (6), preferably, this level is located above the level of liquid in the annular space (3a) when the mixer (29) is located below the permeable geological formation (6), and
● openings (29e) arranged at the bottom of the phase separation chamber (29c) through which the $CO_2$-enriched brine or water and more soluble gases, where appropriate, leaves.

In another embodiment of the invention, the mixing mechanism (29) comprises a HiGee, acronym for High Gravity, type centrifugal gas mini-mixer:

● Ramshaw, 1983. "HiGee" distillation- An example of process intensification. Chem. Engineer. 389, 13-14;
● Stankiewicz and Moulijn, 2004, Re-engineering the chemical process plant. Process intensification, Marcel Dekker, Inc., New York;
● Rao et al., 2004. Process intensification in rotating packed beds (HIGEE): An appraisal. Ind. Eng. Chem. Res. 43, 1150-1162.

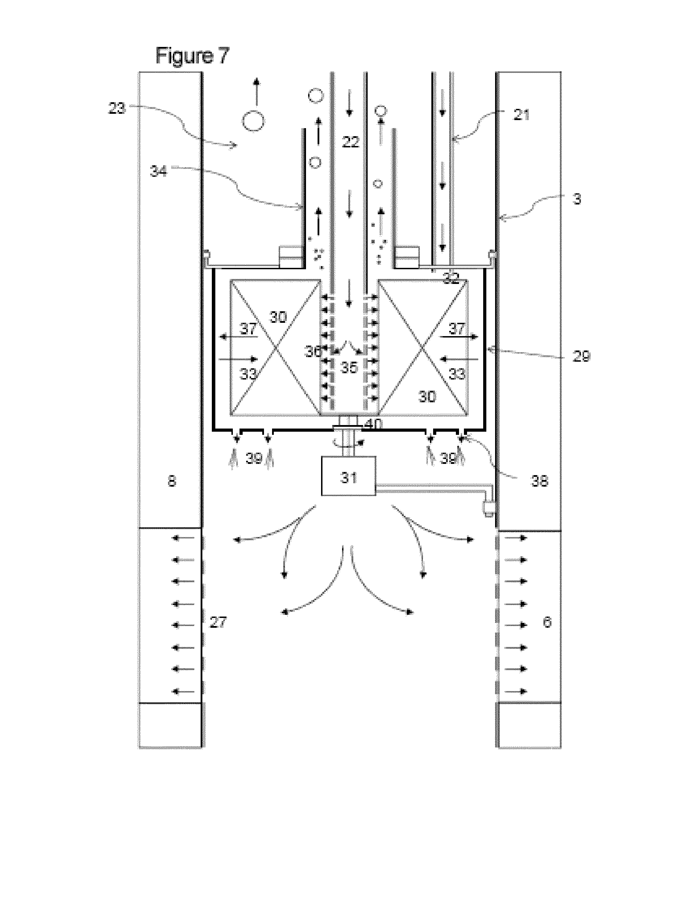

In other words, a cylinder which contains a rotating packed bed (30) as shown in Figures 7 and 8. In this case, the operation cost could be increased a little because a submersible motor (31) is needed to induce the rotation, but it would be compensated by the increase in the efficiency of the mixture and dissolution of the gas in the liquid (higher turbulence and interface contact area). In fact, this system can induce centrifugal forces up to 1000 times greater than gravity (Rao et al., 2004), which would allow dramatically enhancing the performance and the mass transfer efficiency of the operation, i.e., the dissolution of the $CO_2$ in the brine and the separation of the gaseous phase containing the less soluble components. The centrifugal mixers have been used in the past for absorbing $CO_2$ contained in air by concentrated monoethanolamine solutions (Chambers and Wall, 1954. Some factors affecting the design of centrifugal gas absorbers. Trans. Inst. Chem. Eng. 32 S96; Coulson and Richardson, 1978. Chemical Engineering, Vol. 2 Unit Operations. Third Edition, Pergamon Press. Chapter 12, Absorption of Gases, pp. 578-582, Oxford).

Figure 7 generally shows an example of how this idea could be implemented when the mixer (29) is located above the permeable geological formation (6). In this case, the gas injection conduit (21) is connected to the HiGee mixer (29) at its upper part at a point close to the side (32) of the mixer. The gas is introduced into the casing and inside flows radially: radial gas flow (33) through the rotating packed bed (30) from its outer face towards the shaft of the rotor, until reaching the non-soluble gas extraction conduit (34). The brine or water injection conduit (22) is connected to the central upper part of the mixer (29), through the inside of the non-soluble gas extraction conduit (34). The brine is fed through a liquid distributor (35) located at the lower end of the brine or water injection conduit (22) in the form of jets or spray of droplets impacting on the inner surface (36) of the rotating packed bed (30), and thus the radial liquid flow (37) is outwards in counter-current to the radial gas flow (33) under the influence of the centrifugal field. Depending on the type of packing, the injected gas and liquid flow rates and the rotation speed of the rotor, the brine will flow in the packed bed (30) as thin films, rivulets, flying droplets or films covering the pores of the packing.

The mixer (29) will have openings (38) for the outlet of the $CO_2$-enriched brine. Optionally, these openings (38) can be provided with mini-nozzles, syringes or gratings for creating $CO_2$-enriched brine micro droplets and spray (39). The shaft of the rotor (40) of the packed bed (30) will be driven by a submersible motor (31).

Therefore if the system has a dynamic mixer (29), in an embodiment the system is characterized in that the dynamic mixer (29) comprises:

- a cylinder provided therein with a rotating packed bed (30),
- a submersible motor (31) for driving the shaft of the rotor (40) of the packed bed (30),
- openings (38) for the outlet of the $CO_2$-enriched brine
and more soluble gases,
wherein:
- the gas flows radially: radial gas flow (33) through the packed bed (30) from its outer face towards the shaft of the rotor (40), until reaching the non-soluble gas extraction conduit (34),
- the brine or water injection conduit (22) is connected to mixer (29) at the central upper part, through the inside of the non-soluble gas extraction conduit (34),
- the brine or water is fed through a liquid distributor (35) located in the lower end of the brine or water injection conduit (22), in the form of jets or spray of droplets impacting on the inner surface (36) of the packed bed (30), and flows radially: radial liquid flow (37) outwards in counter-current to the radial gas flow (33) under the influence of the centrifugal field.

In another preferred embodiment of the invention, as observed in Figure 8, the mixing mechanism (29) is located below the permeable geological formation (6). This embodiment allows increasing the $CO_2$ level (and other soluble greenhouse gases) dissolved in the brine when the injected gas is a multi-component gaseous mixture (e.g., a flue gas stream).

To prevent the bubbles of non-soluble gases which rise (41) and reach the level of the permeable geological formation (6) from entering the latter, the grooved piping section (27) has a filter (42) made of hydrophilic material with an inlet pressure comparable to the capillary pressure of the gas for preventing the passage of the gas bubbles (41). This filter (42) is arranged such that it forms a kind of funnel which allows the free passage of the brine or water flow (43) towards the permeable geological formation (6) and the flow of non-soluble gases towards the upper part of the well. To minimize the number of gas bubbles around the grooved piping section (27), the upper end of the non-soluble gas extraction conduit (34) is preferably located above the permeable geological formation (6), preferably above the level of liquid in the annular space (3a).

In another preferred embodiment, the mixer (29) incorporates an autonomous cooling system in order to further favor the dissolution of $CO_2$. Artificial cooling is performed in a particular embodiment by providing the mixers (29) with cooling coils or sleeves (44). Although this alternative entails a significant energy increase, the increased operating costs are compensated with the energy savings due to the absence of capture operations.

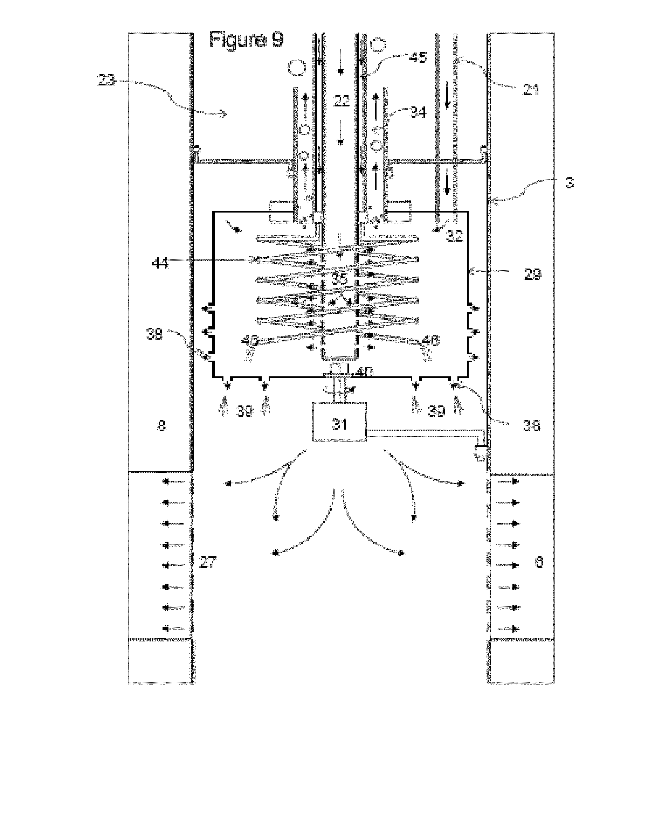

Figure 9 generally shows an embodiment of the invention for implementing this idea. In this case, the mixer (29) consists of a rotating cylinder incorporating a cooling coil (44) therein through which a coolant circulates. In different embodiments liquid or supercritical $CO_2$ is used as a coolant which is especially relevant for the problem (Agrawal and Bhattacharyya, 2007. Adiabatic capillary tube flow of carbon dioxide in a transcritical heat pump cycle. Int. J. Energy Res. 31, 1016-1030). Figure 9 shows a system formed, in addition to the gas injection conduits (21) and brine or water injection conduits (22), by a liquid $CO_2$ injection conduit (45) concentric to the brine or water injection conduits (22) through which the cold $CO_2$ is injected, preferably in liquid state. In this configuration, to make use of the cooling $CO_2$ injection and storage, the lower ends of the coil (46) are open. The lower end of the brine or water injection conduit (22) is grooved (35) (e.g., openings) to cause a radial flow of the injected brine or water (47). In this particular embodiment, the gas is introduced close to the side of the cylinder (32) to favor a counter-current radial flow of the injected phases. The non-soluble gases are extracted through the non-soluble gas extraction conduit (34), which in this particular embodiment of the invention is concentric to the coolant injection conduits (45) and brine or water injection conduit (22). The shaft of the rotating cylinder is driven by a submersible motor (31), similarly to that which has been described for Figures 7 and 8. The cylinder has openings (38) for expelling the cold $CO_2$- enriched brine or water. The advantage of this configuration is that the injection of liquid $CO_2$ is enough to cool the system without having to use a heat pump, which in other circumstance would have to be located on the surface, at the same time the liquid $CO_2$ is injected, further favoring injection and storage efficiency. Furthermore, the cooling coil (44) also acts as an additional mixing element like blades.

In this example the mixing mechanism (29) is located above the inlet to the permeable geological formation (6), however, in another embodiment (not depicted) it is possible to arrange the mixing mechanism as shown in Figure 8 with the mixing mechanism (29) below the inlet to the permeable geological formation (6).

Therefore, it is possible to provide the mixer (29) with an autonomous cooling mechanism, as depicted in this embodiment of the invention, a system characterized in that the mixer (29) is a rotating cylinder comprising:

- a cooling coil (44) inside, through which a coolant, preferably liquid or supercritical $CO_2$, circulates,
- a liquid CO2 injection conduit (45) through which the cold $CO_2$ is injected, preferably in liquid state,
- the lower ends (46) of the coil are open,
- the lower end of the brine or water injection conduit (22) is grooved (35) to cause a radial flow of the injected brine or water (47),
- the gas is introduced such that a counter-current radial flow of the injected phases is favored,
- the non-soluble gases are extracted through the non-soluble gas extraction conduit (34),
- the shaft of the rotating cylinder is driven by a submersible motor (31) to allow rotating the cylinder,
- the cylinder will have openings (38) to expel the $CO_2$- enriched cold brine and
- the cooling coil (44) also acts as an additional mixing element, like blades.

To implement the conventional $CO_2$ storage method and the storage methods proposed in the present invention it is sufficient to have storage capacities of tens of thousands of tons. In a combined $CO_2$ injection system such as the one proposed, the amount that can be stored would be greater than that of a conventional system. The storage method of the present invention is better, more efficient or more profitable than conventional supercritical $CO_2$ storage. In fact, in some situations it maybe not be possible or economically viable to separate the $CO_2$ from the flue gas stream, for example, in the cement industry. Since the capture and separation methods today in the cement industry arise as a long-term solution for this type of industry and in some cases the associated costs could become prohibitive, the present invention constitutes an attractive and economically profitable method because the concentration of $CO_2$ is greater than that of the combustion gases.

## Advantages of the different embodiments of the invention

Relating to the different embodiments of the invention, the advantages of the system are:

1. The volume of water extracted is similar to that injected in the embodiment in which the brine or water is extracted from the same permeable geological formation (6) in which it is subsequently injected. Therefore, the interstitial pressures at regional scale will not increase. The pressures will only increase in a radius area of the order of twice the distance between wells.

2. The risk of leakages is reduced dramatically. The $CO_2$-rich water tends to sink.

3. Specifying strict requirements for caprock (8) is not needed.

4. The present storage method allows also sequestrating other greenhouse gases, which is a significant comparative economical advantage. The greenhouse effect of some of the soluble gases ($NO_x$, $SO_x$, $CH_4$) is much greater than that of the $CO_2$. Therefore, the present invention allows certifying more than one ton of equivalent $CO_2$ per ton of soluble injected gas.

5. The $CO_2$ (and, where appropriate, other greenhouse gases) is directly injected dissolved in the permeable geological formation (6), which prevents overpressure problems (in terms of volume of liquid, the volume which is injected is similar to the volume which is extracted if the extraction is made from the same aquifer in which it is injected) and dramatically reduces the risk of leakage. This significantly eases the caprock requirements.

6. The system is applicable to any source of combustion gases without excessive costs. In the case of injecting supercritical $CO_2$, the efficiency (energy required) of the system improves very significantly, but it is not essential.

7. From an energy point of view, theoretically, the system is neutral. The energy cost per kg of injected $CO_2$ is the same whether supercritical $CO_2$, dissolved pure $CO_2$ or $CO_2$ mixed with other combustion gases is injected (assuming, in this last case, that the energy is completely recovered from the non-soluble gases accumulated in the upper part of the injection well (3)). The system will lose some efficiency when the actual performances are considered.

8. In general, the system harnesses the gravity forces, benefiting from the fact that the density of the brine or water is much higher than that of the gases.

9. The system is relatively simple in concept, although the execution will require a careful design of the compression, cooling and energy recovery systems, especially in the case of directly injecting flue gases.

10. In principle the system is relatively simple to control.

The control variables are the gas and salt water injection pressure. The variables to be measured are the pressure at the wellhead (3d) and the pH of the salt water.

11. The relative simplicity and the fact that strict sealing requirements of the permeable geological formation (6) are not involved means that it can be applied to $CO_2$ sources having very different flow rates.

12. The phases descend and are individually compressed, preventing or at least reducing the possibility of phase changes in the gas injection conduit (21).

13. The cooling of the system (by means of the conditioning system (2) for conditioning brine or injection water and/or providing the mixers (29) with an autonomous cooling mechanism) with injection of cold fluids improves the dissolution of the $CO_2$.

14. Unlike most of the known $CO_2$ storage methods and injection systems, the present concept of injection-dissolution well (3) allows simultaneously injecting pure $CO_2$ (gaseous, liquid and/or supercritical) or mixed with other gases. In some cases, the injected liquid $CO_2$ also allows cooling the system at the level of the permeable geological formation (6) for storage, improving even more the dissolution of the gases.

15. The use of static or dynamic mixers (29) significantly increases the performance of the operation (dissolution of gases with $CO_2$ in the brine or water), compared with the use of rotating cylinders or nozzles (25).

16. The use of a static mixer (29) entails lower maintenance costs and lower energy consumption than those inventions which consider a low performance dynamic mixer (29).

**Numbering of the Drawings:**

1. Gas compression system.
1a. Gas inlet (pure $CO_2$ or flue gases).
1b. Compressor/compressors of injection gases.
1c. Compressed gas stream.
1d. Gas containing vessel/vessels.
1e. Shaft of the compressor.
2. Conditioning system for conditioning brine or injection water.
2a. Brine or water inlet line (new water or brine).
2b. Drive pump.
3. Injection well.
3a. Level of liquid in the annular space.
3b. Depth of the bottom of the well.
3c. Depth of the bottom of the storage aquifer.
3d. Wellhead.
4. Injection gas stream.
5. Gas concentration meter-actuator and switch valve.
5a. Gas recirculation line.
5b. To energy recovery.
6. Permeable geological formation.
7. Energy recovery system for recovering energy from non-soluble gases.
7a. Dehumidifier.
7b. Heater/heaters.
7c. Turbine system.
7d. Exhaust gas discharge.

7e. Shaft of the turbine

8. Caprock formation.

9. $CO_2$ bubble and $CO_2$ plume dissolved in the resident brine of the aquifer.

10. $CO_2$ leakage towards surface aquifers.

11. Brine leakage.

12. $CO_2$ leakage through the aquifer.

13. Risk of rupture of the caprock.

14. Initial pressure.

15. Overpressure caused by conventional $CO_2$ storage.

16. Brine or water extraction point.

17. Gas injection point (17a) and brine or water injection point (17b).

18. Brine from the aquifer with dissolved $CO_2$.

19. Dissolved $CO_2$ flow towards the deepest part of the aquifer.

20. Overpressure caused by the present storage method: brine or water extraction and dissolved $CO_2$ injection and storage.

21. Gas injection conduit.

22. Brine or water injection conduit.

23. Annular space for extracting non-soluble gases.

24. Well with several pairs of brine or water and gas injection tubing.

25. Nozzle for creating gas microbubbles.

26. As the gas bubbles rise by flotation, the more soluble components ($CO_2$ and, where appropriate, $SO_2$, $NO_x$, etc.) are dissolved in the brine or water.

27. Grooved piping section.

28. Non-soluble gases.

29. Mixing mechanism or mixer:

- Static mixer, Figure 5c;
- HiGee type centrifugal gas absorber, Figures 7 and 8;
- Rotating cylinder with cooling coil and liquid $CO_2$ injection, Figure 9.

In the case of the static mixer:

29a. Gaseous and aqueous phase pre-mixing chamber.

29b. Blades.

29c. Phase separation chamber.

29d. Separator element, for example coil, helix or mini-hydrocyclone.

29e. Openings for the outlet of $CO_2$-enriched brine or water
and other soluble gases, where appropriate.

30. Rotating packed bed for contacting gas ($CO_2$ or flue gases) and liquid (brine or water).

31. Submersible motor.

32. Gas inlet.

33. Radial gas flow through the packed bed.

34. Non-soluble gas extraction conduit.

35. Liquid distributor.

36. Inner surface of the packed bed.

37. Radial flow of liquid through the packed bed.

38. Openings for the outlet of liquid.

39. $CO_2$-enriched brine spray or droplets.

40. Rotor or rotating shaft.

41. Rising non-soluble gas bubble flow.

42. Filter made of hydrophilic material preventing the passage of non-soluble gases towards the permeable geological formation 6.

43. Brine or water flow.

44. Cooling coil for circulating coolant and/or injecting liquid $CO_2$.

45. Liquid $CO_2$ injection conduit.

46. Lower end of the coil.

47. Radial flow of brine or injected water.

**Claims**

1. A method for storing soluble gases in permeable geological formations which comprises the following steps:

   a) extracting brine or salt water from the sea or from an aquifer, or, if the permeable geological formation (6) for storage is an aquifer, from the aquifer itself, at a brine or water extraction point (16) located at a higher hydraulic elevation than the injection point (17),
   b) injecting the brine or water into the permeable geological formation (6),
   c) compressing the gases formed by pure $CO_2$ or $CO_2$ plus other soluble and non-soluble gases,
   d) injecting the gases into the permeable geological formation (6), and
   e) if the gases are formed by $CO_2$ plus other at least non-soluble gases, recovering the energy from the non-dissolved gases.

2. The method according to claim 1, **characterized in that** before injecting the brine or salt water into the permeable geological formation (6), the brine or salt water is cooled and/or compounds are added thereto to increase $CO_2$ solubility.

3. The method according to claim 2, **characterized in that** the step of cooling the brine or salt water is used for extracting the energy coming from this medium in the form of heat.

4. The method according to claim 1, **characterized in that** it further comprises the step of mixing the gas with the brine or water inside the injection well (3).

5. The method according to claim 4, **characterized in that** it comprises the step of cooling inside the injection well (3) while simultaneously mixing the gas with the brine or water.

6. A system for storing soluble gases in permeable geological formations comprising:

   ● extraction means adapted for extracting brine or salt water from the sea, or from an aquifer or, if the permeable geological formation (6) for storage is an aquifer, from the aquifer itself, at a brine or water extraction point (16) located at a higher hydraulic elevation than the injection point (17),
   ● a conditioning system (2) for conditioning brine or injection water,
   ● at least one gas compression system (1) for compressing gases formed by pure $CO_2$ or $CO_2$ plus other soluble and non-soluble gases,
   ● an injection well (3) with piping, with a conduit system which in turn comprises:

      o at least one conduit suitable for injecting the gas (21), reaching at least the depth of a permeable geological formation (6) suitable for storing $CO_2$ and other soluble gases,
      o at least one conduit suitable for injecting brine or water (22), and

   ● an energy recovery system (7) for recovering energy from the rising non-dissolved gases, if the gases are formed by $CO_2$ plus other at least non-soluble gases.

7. The system according to claim 6, wherein the energy recovery system (7) comprises: a dehumidifier (7a), at least one heater (7b) and a turbine system (7c).

8. The system according to any of claims 6 or 7, **characterized in that** the at least one gas compression system (1) comprises:

   o a gas inlet (1a) of pure $CO_2$ or flue gases,
   o at least one compressor (1b) of injection gases, and
   o at least one gas containing vessel (1d).

9. The system according to any of claims 6 to 8, **characterized in that** the energy recovery system (7) and the at least one gas compression system (1) are integrated in a combined turbo (7e) compressor (1e) system, which allows harnessing the energy from the non-soluble gases for compressing the injection gases.

10. The system according to any of claims 6 to 9, **characterized in that** the conditioning system (2) for conditioning brine or injection water is adapted to receive the brine or the water extracted:

● either from an aquifer located at a point away from the injection well (3) or located on the vertical of the injection well (3), at a lower depth than that of the permeable geological formation (6) for storage, preferably when the aquifer is in communication with said formation,
● or from the sea,
● or, if the permeable geological formation (6) is an aquifer, from the same aquifer for storage at a point where the water injected during the operation of the system does not reach for preventing overpressures.

11. The system according to any of claims 6 to 10, **characterized in that** the conditioning system (2) for conditioning brine or injection water is adapted for cooling and/or adding compounds, preferably alkaline material, to said brine or water to increase $CO_2$ solubility.

12. The system according to any of claims 8 to 11, **characterized in that** the system further comprises a recirculation line 5a for recirculating the non-dissolved gases feeding the gas containing vessel (1d), said line 5a comprising:

● a meter-actuator (5) for determining the composition of the gas flow, and
● a switch valve for controlling the direction of the flow, such that when the concentration of $CO_2$ falls below a predetermined value, the valve is adapted for directing the flow towards the energy recovery system (7), otherwise, the gas stream is recirculated to the gas containing vessel (1d) for re-injection into the well.

13. The system according to claim 6, **characterized in that** the at least one conduit (22) suitable for injecting brine or water reaches a few meters above the lower end of the at least one conduit suitable for injecting the gas (21).

14. The system according to any of claims 6 to 13, **characterized in that** the at least one conduit suitable for injecting the gas (21) is provided with nozzles (25) at its lower end for injecting the gas in the form of mini bubbles.

15. The system according to any of claims 6 to 13, **characterized in that** the system has a mixing mechanism (29) located either above or below the permeable geological formation (6) for storage, which allows increasing the concentration of $CO_2$ and other soluble greenhouse gases dissolved in the brine or water.

16. The system according to claim 15, **characterized in that** the inlet of the permeable geological formation (6) for storage comprises a grooved piping section (27) with a filter (42) made of a hydrophilic material with an inlet pressure comparable to the capillary pressure of the gas so that the non-soluble gas bubbles which rise (41) and reach the level of the permeable geological formation (6) for storage do not enter into the latter, and wherein the filter (42) is arranged such that it forms a funnel allowing the free passage of the brine or water flow (43) towards the permeable geological formation (6) and the non-soluble gas flow towards the wellhead (3d).

17. The system according to claim 16, **characterized in that** it comprises a non-soluble gas extraction conduit (34) the upper end of which is preferably located above the permeable geological formation (6), yet more preferably above the level of liquid in the annular space (3a) for minimizing the number of gas bubbles in this area.

18. The system according to any of claims 15 to 17, **characterized in that** the mixing mechanism (29) is a static mixer (29), preferably a Kenics type mixer.

19. The system according to any of claims 15 to 17, **characterized in that** the mixing mechanism (29) is a dynamic mixer (29), preferably a rotating cylinder mixer, or mini stirred tank, or a centrifugal gas mini-mixer, in this case preferably a HiGee - High Gravity type mixer.

20. The system according to any of claims 15 to 19, **characterized in that** the mixing mechanism (29) can incorporate an autonomous cooling system, preferably with cooling coils (44) or cooling sleeves.

Figure 1

Figure 2

Figure 3

Figure 4

Figure 5

Figure 6

Figure 7

Figure 8

Figure 9

**Europäisches Patentamt**
**European Patent Office**
**Office européen des brevets**

# EUROPEAN SEARCH REPORT

Application Number

EP 11 38 2321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2009/061187 A2 (IF TECH BV [NL]; VERENIGING VOOR CHRISTELIJK HO [NL]; DRIJVER BENNO CO) 14 May 2009 (2009-05-14) * page 3, line 17 - page 7, line 18 * | 1-6,14, 15 | INV. E21B41/00 |
| E | US 2012/038174 A1 (BRYANT STEVEN L [US] ET AL) 16 February 2012 (2012-02-16) * page 4, paragraph 42 * | 1,6 | |
| A,D | US 2010/170674 A1 (BLOUNT GERALD [US] ET AL) 8 July 2010 (2010-07-08) * the whole document * | 1-20 | |
| A,D | BENSON S ET AL: "Underground Geological Storage", IPCC SPECIAL REPORT ON CARBON DIOXIDE CAPTURE AND STORAGE, , 22 September 2005 (2005-09-22), pages 1-82, XP007920444, Retrieved from the Internet: URL:http://www.ipcc.ch/pdf/special-reports /srccs/srccs_chapter5.pdf [retrieved on 2012-03-28] * the whole document * | 1-20 | |

-/--

| | TECHNICAL FIELDS SEARCHED (IPC) |
|---|---|
| | E21B B01D B65G |

The present search report has been drawn up for all claims

| Place of search | Date of completion of the search | Examiner |
|---|---|---|
| Munich | 30 March 2012 | Morrish, Susan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 11 38 2321

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BACHU S: "Sequestration of CO2 in geological media in response to climate change: road map for site selection using the transform of the geological space into the CO2 phase space", ENERGY CONVERSION AND MANAGEMENT, ELSEVIER SCIENCE PUBLISHERS, OXFORD, GB, vol. 43, no. 1, 1 January 2002 (2002-01-01), pages 87-102, XP004311360, ISSN: 0196-8904, DOI: 10.1016/S0196-8904(01)00009-7 * the whole document * ----- | 1-20 | |
| A | BACHU S ET AL: "Sequestration of CO2 in geological media in response to climate change: capacity of deep saline aquifers to sequester CO2 in solution", ENERGY CONVERSION AND MANAGEMENT, ELSEVIER SCIENCE PUBLISHERS, OXFORD, GB, vol. 44, no. 20, 1 December 2003 (2003-12-01), pages 3151-3175, XP004447099, ISSN: 0196-8904, DOI: 10.1016/S0196-8904(03)00101-8 * the whole document * ----- | 1-20 | TECHNICAL FIELDS SEARCHED (IPC) |

-/--

The present search report has been drawn up for all claims

| Place of search | Date of completion of the search | Examiner |
|---|---|---|
| Munich | 30 March 2012 | Morrish, Susan |

EPO FORM 1503 03.82 (P04C01)

Europäisches
Patentamt

European
Patent Office

Office européen
des brevets

# EUROPEAN SEARCH REPORT

Application Number

EP 11 38 2321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOSCHEL D ET AL: "Enthalpy and solubility data of $CO_2$ in water and NaCl(aq) at conditions of interest for geological sequestration", FLUID PHASE EQUILIBRIA, ELSEVIER, AMSTERDAM, NL, vol. 247, no. 1-2, 15 September 2006 (2006-09-15), pages 107-120, XP024937011, ISSN: 0378-3812, DOI: 10.1016/J.FLUID.2006.06.006 [retrieved on 2006-09-15] * the whole document * | 1-20 | |

-----

TECHNICAL FIELDS
SEARCHED    (IPC)

The present search report has been drawn up for all claims

| Place of search | Date of completion of the search | Examiner |
|---|---|---|
| Munich | 30 March 2012 | Morrish, Susan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

**ANNEX TO THE EUROPEAN SEARCH REPORT
ON EUROPEAN PATENT APPLICATION NO.** EP 11 38 2321

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2012

| Patent document cited in search report | Publication date | Patent family member(s) | Publication date |
|---|---|---|---|
| WO 2009061187 A2 | 14-05-2009 | NL 1034656 C2<br>WO 2009061187 A2 | 11-05-2009<br>14-05-2009 |
| US 2012038174 A1 | 16-02-2012 | US 2012038174 A1<br>WO 2012021810 A2 | 16-02-2012<br>16-02-2012 |
| US 2010170674 A1 | 08-07-2010 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008058298 A, Jackson
- US 20100170674 A, Blount
- US 7770640 B, Kresnyak and Bunio
- WO 2011017609 A, Constantz
- WO 2009061187 A, Drijver
- US 20090202304 A, Koide and Shinoda
- US 20110017456 A, Koide and Shinoda

### Non-patent literature cited in the description

- **BACHU, S.** Sequestration of CO2 in geological media in response to climate change: road map for site selection using the transform of the geological space into CO2 phase space. *Energy Convers. Manag.,* 2002, vol. 43, 87-102
- Intergovernmental Panel on Climate Change. Special Report on Carbon Dioxide Capture and Storage. Cambridge University Press, 2005, 195-276
- **SPYCHER ; PRUESS.** CO2-H2O mixtures in the geological sequestration of CO2. II. Partitioning in chloride brines at 12-100 °C and up to 600 bar. *Geochimica et Cosmochimica Acta,* 2005, vol. 69 (13), 3309-3320
- **REDLICH ; KWONG.** On the thermodynamics of solutions. V. An equation of state. Fugacities of gaseous solutions. *Chem. Rev.,* 1949, vol. 44, 233-244
- **PRAUNITZ et al.** Molecular thermodynamics of fluid phase equilibria. Prentice Hall, 1986
- **PITZER.** Thermodynamics of electrolytes. I. Theoretical basis and general equations. *Journal of Physical Chemistry,* 1973, vol. 77 (2), 268-277
- The NIST Chemistry WebBook. Sander, 1999
- **TAJIMA et al.** Continuous formation of CO2 hydrate via a Kenics-type static mixer. *Energy and Fuels,* 2004, vol. 18, 1451-1456
- **TAJIMA et al.** Effects of mixing functions of static mixers on the formation of CO2 hydrate from the two-phase flow of liquid CO2 and water. *Energy and Fuels,* 2005, vol. 19, 2364-2370
- **RAMSHAW.** HiGee'' distillation- An example of process intensification. *Chem. Engineer.,* 1983, vol. 389, 13-14
- Re-engineering the chemical process plant. **STANKIEWICZ ; MOULIJN.** Process intensification. Marcel Dekker, Inc, 2004
- **RAO et al.** Process intensification in rotating packed beds (HIGEE): An appraisal. *Ind. Eng. Chem. Res.,* 2004, vol. 43, 1150-1162
- **CHAMBERS ; WALL.** Some factors affecting the design of centrifugal gas absorbers. *Trans. Inst. Chem. Eng.,* 1954, vol. 32, S96
- **COULSON ; RICHARDSON.** Chemical Engineering. Pergamon Press, 1978, vol. 2, 578-582
- **AGRAWAL ; BHATTACHARYYA.** Adiabatic capillary tube flow of carbon dioxide in a transcritical heat pump cycle. *Int. J. Energy Res.,* 2007, vol. 31, 1016-1030